# EUROPEAN PATENT SPECIFICATION

(11) **EP 2 876 338 B1**
(45) Date of publication and mention of the grant of the patent: **30.03.2016**
(21) Application number: 13193923.3
(22) Date of filing: 21.11.2013
(51) Int. Cl.: F16K 17/196

(54) **Check valve with back pressure relief**
Rückschlagventil mit rückseitiger Druckentlastung
Clapet de non-retour avec libération de contre-pression

(43) Date of publication of application: 27.05.2015
(73) Proprietor: Western Global Holdings Limited, Yate Bristol BS37 7LD (GB)
(72) Inventor: Davies, John, Bristol, South Gloucestershire BS37 7LD (GB); Davies, Neal, Bristol, South Gloucestershire BS37 7LD (GB)
(74) Representative: Worthington, Richard Easton

(56) References cited:
- DE-A1- 4 408 357
- DE-A1-102010 020 525
- JP-U- S5 790 265
- US-A1- 2011 278 775

## Description

### FIELD OF THE INVENTION

The present invention relates to a check valve with back pressure relief, particularly, though not exclusively, for use with a liquid fuel storage tank.

### BACKGROUND OF THE INVENTION

Liquid fuel storage tanks for the storage of liquid fuel at substantially atmospheric pressure typically include a check valve or non-return valve. The check valve is typically provided in the liquid supply line extending between the tank internal storage volume and a pump. The check valve maintains a flooded suction line to the pump and obviates the necessity to re-prime the pump at each use.

Depending on the pump type, closing the outlet of the pump during operation may cause pressure to build up in the pump itself if it is left running. It is therefore preferable to stop the pump operation as soon as the outlet from the pump is closed. Often a bypass mechanism is included to prevent pump pressurization. This bypass may be integral in the pump design or may be supplied by a small pipe externally connecting the pump inlet and the pump outlet. In either case the liquid supply line to the pump may become pressurized - if only briefly - and pressure relief is limited by the presence of the check valve in the supply line. Repeatedly pressurizing the supply line in this way can lead to failure of seals, hoses and joints and ancillary equipment. Pressure can also rise within the supply line due to fluctuations in the ambient temperature. Thus provision of back pressure relief of the check valve is a desirable feature.

Liquid fuel storage tanks used above ground may have a capacity of up to around 60,000 litres or more. Examples of such tanks include intermediate bulk containers, bulk storage tanks and bowsers. Intermediate bulk containers have a maximum capacity of 3,000 litres. Bulk storage tanks are not transportable (when filled).

The check valves when used with tanks for storage of liquid fuel above ground typically also provide an anti-syphon capability to the liquid supply line. The suction pressure of the pump is required to open the check valve and initiate fuel flow.

Back pressure relief has been provided in existing check valve/anti-syphon valves using a flap valve or elastomeric sleeve. Both these methods rely on the elasticity of the elastomer for satisfactory operation. Elastomers age and their properties degrade with time and are dependent on compatibility with the liquid in the system. Consistent long term operation cannot be guaranteed with these designs.

The check valves when used with tanks for storage of liquid fuel below ground typically do not have an anti-syphon requirement.

Some fuel storage regulations require check valves to provide back-pressure relief for use in fuel tanks for storage of liquid fuels having a flash point above 23 degrees Celsius and having a tank volume up to 10,000 litres. Providing back-pressure relief is still of benefit for use with tanks for storage of less volatile fuels or for larger capacity tanks.

Furthermore, check valves are also used in vents for such fuel storage tanks to enable pressure equalisation during pumping of fuel from the tanks. The check valve prevents inadvertent leakage of fuel in the unlikely event of tank tip-over. However, due to variations in ambient temperature an over pressure situation can sometimes arise within the fuel storage tank. The risk of tank tip-over is typically limited to above ground liquid fuel storage tanks, and is of particular risk with transportable tanks.

US 2011/0278775 discloses a check valve comprising:
a valve body having an inlet port, an outlet port and a first seat;
a lift mounted for movement between a closed position in which the lift is retained against the first seat and an open position in which the lift is displaced from the first sea to allow fluid to pass from the inlet port to the outlet port;
a first spring for biasing the lift to the closed position; and
a back pressure relief valve comprising a ball check valve mounted in a bore, the bore being open at one end to fluidly communicate with the inlet port and being open at its opposite end to fluidly communicate with the outlet port, and the ball check valve having:
   a second seat,
   a ball for movement between a closed position in which the ball is retained against the second seat and an open position in which the ball is displaced from the second seat to allow fluid to pass through the bore, and
   a second spring for biasing the ball to the closed position,
   wherein the ball check valve is configured to open when the pressure at the outlet port exceeds the pressure at the inlet port.

There is therefore a need for an improved check valve with back pressure relief.

### SUMMARY OF THE INVENTION

A first aspect of the invention provides a check valve comprising: a valve body having an inlet port, an outlet port and a first seat; a lift mounted on a guide shaft for movement between a closed position in which the lift is retained against the first seat and an open position in which the lift is displaced from the first seat to allow fluid to pass from the inlet port to the outlet port; a first spring for biasing the lift to the closed position; and a back pressure relief valve comprising a ball check valve mounted in a bore through the guide shaft, the bore being open at one end to fluidly communicate with the inlet port and being open at its opposite end to fluidly communicate with the outlet port, and the ball check valve having: a second seat, a ball for movement between a closed position in which the ball is retained against the second seat and an open position in which the ball is displaced from the second seat to allow fluid to pass through the bore, and a second spring for biasing the ball to the closed position, wherein the ball check valve is configured to open when the pressure at the outlet port exceeds the pressure at the inlet port.

The invention is advantageous in that the method of back pressure relief does not rely particularly on material flexibility but on mechanical movement of the ball against the spring, making it less susceptible to degradation over time than the elastomeric flap valve or sleeve designs in the state of the art.

The ball may include an elastomeric material. Alternatively the ball may comprise another material suited for use with the fluid being communicated through the ball check valve when open. For example a metallic ball may be used. A metallic ball may be more suitable than an elastomeric ball for use with liquid fuels such as kerosene that may attack elastomeric materials. When a metallic ball is used the valve seat may need to be more highly toleranced to ensure the integrity of the seal.

The ball check valve may further include a cap having a through bore, the cap being coupled to the guide shaft, and the ball and second spring being retained between the guide shaft and the cap. The cap may be screw threaded to the guide shaft or connected by other retaining means, e.g. snap fit, clamped or the like. The retaining means preferably permits ready assembly and disassembly of the ball check valve. Alternatively, the retaining means may be permanent and unsuitable for disassembly and reassembly, e.g. by welding.

The second seat may be formed in one end of the guide shaft.

The ball check valve may be located in the inlet side of the check valve. Alternatively the ball check valve may be located in the outlet side of the check valve.

The second spring may be a compression spring. The spring provides a positive spring pressure on the ball against its seat. This beneficially overcomes any degradation of the sealing ball and ensures appropriate sealing of the ball check valve when closed.

A second aspect of the invention provides a tank having an internal volume for storage of liquid fuel at substantially atmospheric pressure, at least one liquid supply line in fluid communication with the internal volume, each liquid supply line having a check valve according to a first aspect of the invention.

The tank may have a base, sides and a top. In the second aspect of the invention the check valve may be mounted at the top of the tank, i.e. in the top or at the top of one of the sides of the tank. The supply line may include pipework extending from the top to the bottom of the internal volume of the tank.

In the second aspect the first spring may be rated according to a predetermined check valve cracking pressure. For example, the first spring may be rated according to the height of the tank. More particularly, the check valve cracking pressure may be set greater than an atmospheric pressure differential between the top and bottom of the tank such that the check valve is configured as an anti-syphon valve. The vertical distance between the top and bottom of the tank may be in the range approximately 1 metre to approximately 3 metres.

The supply line may be configured for connection to a pump. The supply line may extend between the pump and the internal volume with the check valve located between the pump and the internal volume.

In the second aspect of the invention the internal volume may be on the inlet port side of the check valve.

If a back pressure develops in the supply line, e.g. due to closing of a pump valve downstream of the pump in the pump flow direction then the ball check valve will open relieving the back pressure in the supply line.

A third aspect of the invention provides a tank having an internal volume for storage of liquid fuel at substantially atmospheric pressure, and a vent in fluid communication with the internal volume, the vent having a check valve according to the first aspect. In the third aspect the check valve may be mounted at the top of the tank, i.e. in the top or at the top of one of the sides of the tank.

In the third aspect of the invention the second spring may be rated according to a predetermined ball check valve cracking pressure. The second spring may be rated according to the volume of the tank. For example, the ball check valve cracking pressure may be set greater than a head of pressure in the tank when the tank is full of liquid and the tank is fully inverted. In this way the second spring may be configured to prevent leakage from the tank even when the tank is fully inverted.

In the third aspect of the invention the internal volume may be on the outlet port side of the check valve, and the inlet port side of the check valve may be open to the ambient atmosphere external to the tank.

If an over pressure develops inside the tank that is greater than the ball check valve cracking pressure then the ball check valve will open relieving the pressure in the tank.

In the third aspect of the invention a cowl may be provided covering the inlet port side of the check valve. The cowl may be screw threaded or otherwise attached to the check valve.

The tank may be selected from the group comprising: an intermediate bulk container, a bulk storage tank and a bowser.

The tank may be adapted to store a hydrocarbon fuel, in particular a hydrocarbon fuel with a flash point above 23 degrees Celsius such as diesel fuel.

### BRIEF DESCRIPTION OF THE DRAWINGS

Embodiments of the invention will now be described with reference to the accompanying drawings, in which:
Figure 1 illustrates a liquid fuel storage tank;
Figure 2 illustrates in detail a cabinet on top of the liquid fuel storage tank having an anti-syphon check valve and a vent check valve;
Figures 3 and 4 illustrate a check valve in accordance with a first embodiment of the invention, for use as the anti-syphon check valve; and
Figures 5 and 6 illustrate a check valve in accordance with a second embodiment of the invention, for use as the vent check valve.

### DETAILED DESCRIPTION OF EMBODIMENT(S)

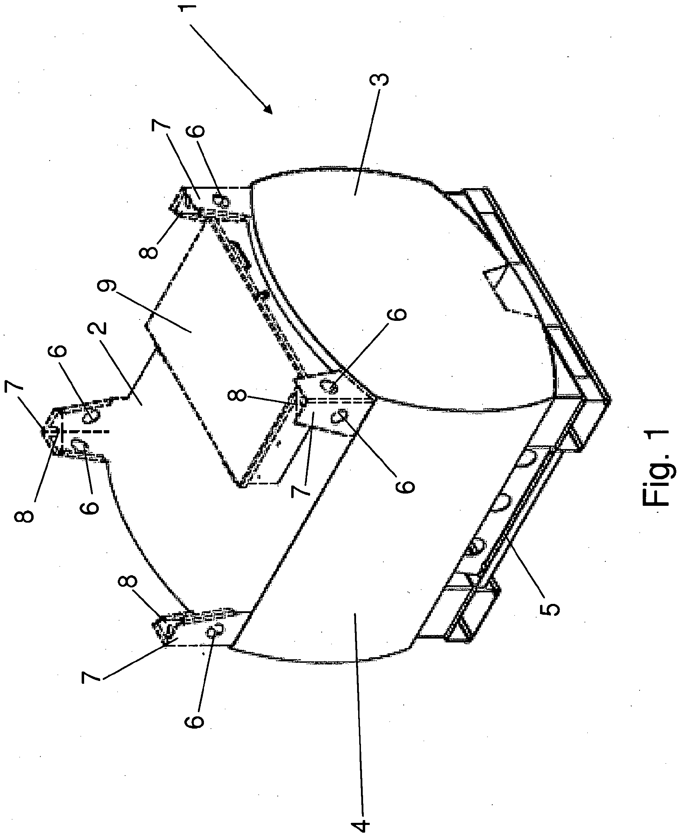

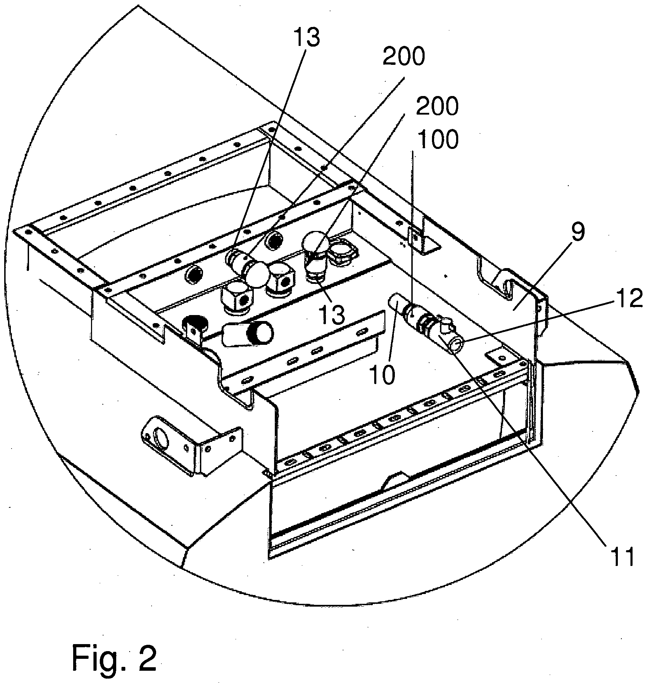

Figure 1 illustrates a liquid fuel storage tank 1 for storing hydrocarbon fuels such as diesel fuel, for example. The tank comprises a top 2, ends 3 (only one of which is visible in Figure 1), sides 4 (only one of which is visible in Figure 1) and a base 5 adapted for lifting by a fork lift. At each top corner of the tank is provided a lifting eye 6 formed in an upright 7 having a rest 8 such that the tanks 1 can be stacked vertically. Also at the top of the tank is a cabinet 9 which is shown in greater detail in Figure 2. It will be appreciated that the dimensions and shape of the tank 1 are purely exemplary and the tank may take a variety of shapes, dimensions and constructions.

As shown in Figure 2 the cabinet 9 (illustrated in Figure 2 with the lid removed) houses a liquid fuel supply line 10 which extends from the cabinet 9 to the bottom of the interior volume (not visible in Figure 1) of the tank 1. Connected to the proximal end of the liquid fuel supply line is a check valve 100 in accordance with a first embodiment of the invention. Downstream of the check valve 100 is an isolation valve 11 having an outlet 12 for coupling the liquid fuel supply line to pumping equipment (not shown) for withdrawing liquid fuel from the tank 1.

The cabinet 9 also houses a plurality of vents 13 in fluid communication with the internal volume of the tank. Coupled to each vent 13 is a check valve 200 in accordance with a second embodiment of the invention.

The number of vents 13, liquid supply lines 10, check valves 100, check valves 200 may vary depending on requirements and the number of these items shown in the Figure 2 is purely exemplary. The cabinet 9 also houses a filling port, sight glasses etc. but these conventional items will not be discussed in further detail here so as to not obscure the clarity of the teaching of this invention.

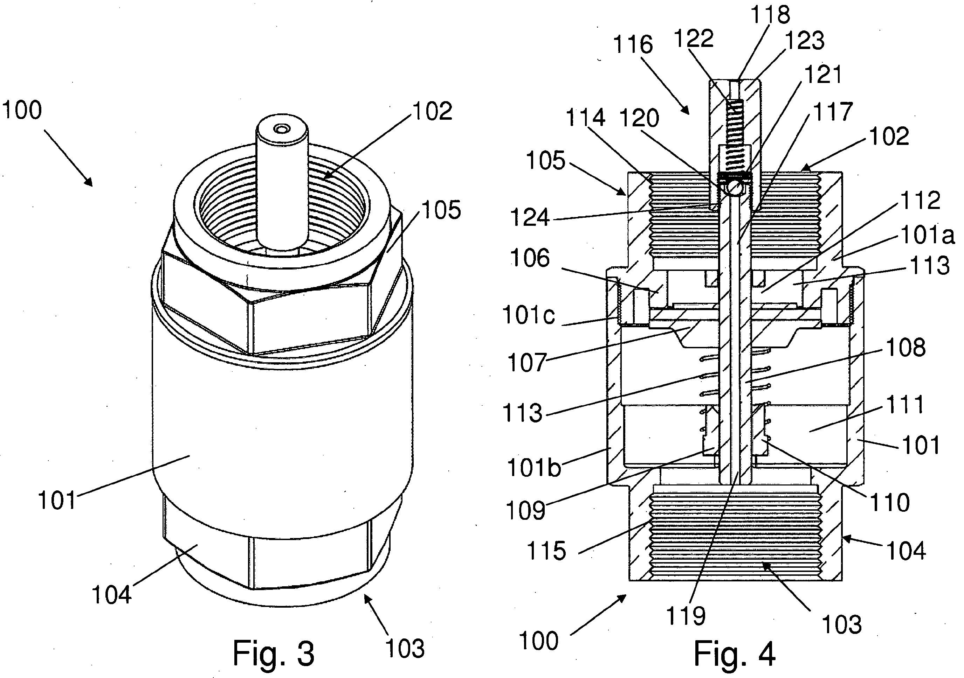

Turning first to Figures 3 and 4 the check valve 100 in accordance with the first embodiment of the invention will now be described in detail. Figure 3 illustrates an elevated isometric view of the check valve 100 and Figure 4 illustrates a cross section through the check valve 100.

The check valve comprises a valve body 101 formed in two portions 101a, 101b which are screw threaded together at threaded portion 101c. The valve body 101 defines an inlet port 102 and an outlet port 103 at opposite ends of the valve body 101. The central portion of the valve body 101 intermediate the inlet port 102 and the outlet port 103 is formed as a generally cylindrical hollow barrel section. Projecting from one end of the cylindrical barrel section the valve body 101 has a faceted outer surface for engagement with a hex tool. At the opposite end of the cylindrical barrel section the valve body portion 101a also has a faceted outer surface 105 for engagement with a hex tool. Using appropriate hex tools the valve body portions 101a, 101b may be rotated relative to one another about the rotational axis of the valve body 101 so as to tighten and un-tighten the screw threaded portion 101c to permit assembly, disassembly and reassembly of the check valve 100. Of course, the valve body may have another shape to engage different tools for this purpose as will be readily appreciated.

The valve body 101 further defines a seat 106 and in the particular example shown in Figures 3 and 4 the seat 106 is an annular ring formed in the valve body portion 101a. A lift 107 having a generally disc shaped form is mounted on a guide shaft 108 for movement between a closed position in which the lift 107 is retained against the seat 106, and an open position in which the lift 107 is displaced from the seat 106. When the lift 107 is in the closed position the lift is sealed against the seat 106 such that fluid substantially cannot pass from the outlet port 103 towards the inlet port 102. When the lift 107 is in the open position fluid is permitted to pass from the inlet port 102 to the outlet port 103. The lift 107 includes a support disc and a sealing disc carried by the support disc for forming a seal with the seat 106 when in the closed position.

The guide shaft 108 is slidably received in a guideway 109 formed in the valve body 101. The guideway comprises a first cylindrical slide boss 110 supported by radial fins 111 coupled between the cylindrical boss 110 and an inner wall of the valve body 101. The guideway also comprises a second cylindrical slide boss 112 supported by radial fins 113 extending between the cylindrical boss 112 and an inner wall of the valve body 101. The cylindrical boss 110 is provided on a first side of the lift 107 and the cylindrical boss 112 is provided on the opposite side of the lift 107 along the length of the guide shaft 108.

A compression spring 113 extends between the lift 107 and the cylindrical boss 110 so as to bias the lift 107 to the closed position. In use, a fluid pressure at the inlet port 102 which provides a positive pressure differential with the pressure at the outlet port 103 sufficient to overcome the force of the spring 113 causes the lift to move from the closed position to the open position so as to allow fluid to pass from the inlet port 102 to the outlet port 103 around the lift 107. Once the positive pressure differential between the inlet port 102 and the outlet port 103 reduces to a value insufficient to overcome the force of the compression spring 113, the compression spring 113 will cause the lift to move from the open position to the closed position.

The compression spring 113 is rated according to a predetermined check valve cracking pressure. The rating of the spring is preferably determined according to the height of the tank such that the check valve cracking pressure is set greater than an atmospheric pressure differential between the top and bottom of the tank 1 so that the check valve 100 is configured as an anti-syphon valve.

As mentioned previously, the outlet 12 of the liquid fuel supply line 10 is configured for connection to a fluid pump. The suction pressure of the pump is required to open the check valve 100 by moving the lift 107 against the force of the spring 113. To prevent the creation of a syphon the spring 113 is rated so as to close the check valve by moving the lift 107 to the closed position when the pump is stopped. To be an anti-syphon check valve the spring 113 may be rated according to the height of the tank which may be typically in the range approximately 1 metre to approximately 3 metres for intermediate bulk containers, bulk storage tanks, bowsers and the like. Typical tank top heights are 1.6 metres and 2.5 metres and so the check valve 100 may have a spring 113 rated for anti-syphon according to a respective one of these tank top heights.

The check valve 100 has an internal screw thread 114 in the inlet port 102 for connection to the liquid supply line nearest the internal volume of the fuel tank. The check valve 100 further comprises an internal screw thread 115 at the outlet port 103 for a screw threaded connection to the isolation valve 11.

The check valve 100 further includes a back pressure relief valve indicated generally at 116. The back pressure relief valve comprises a ball check valve mounted in a bore 117 through the guide shaft 108. The bore 117 is open at one end 118 to fluidly communicate with the inlet port 102 and is also open at its opposite end 119 to fluidly communicate with the outlet port 103.

Intermediate the open ends 118, 119 is the ball check valve which comprises a seat 120, a ball 121 for movement between a closed position in which the ball is retained against the seat 120 and an open position in which the ball is displaced from the seat 120. A spring 122 biases the ball 121 to the closed position. A cap 123 having a through bore forming part of the bore 117 is coupled to the guide shaft 108 by a screw threaded portion 124. The ball 121 and the spring 122 are retained between the guide shaft 108 and the cap 123.

In use, the compression spring 122 acts to bias the ball 121 against the seat 120 so as to prevent the passage of fluid from the inlet port 102 to the outlet port 103 via the bore 117. When the pressure at the outlet port 103 exceeds the pressure at the inlet port 102 by a pressure differential sufficient to overcome the force of the compression spring 122, the ball 121 is displaced from the seat 120 to open the ball check valve thereby allowing fluid to pass from the outlet port 103 to the inlet port 102 via the bore 117.

The back pressure relief valve 116 in the check valve 100 is therefore operable to relieve pressure in the supply line downstream of the check valve 100 that might otherwise lead to failure of seals, hoses and joints and ancillary equipment due to stopping of a pump operation or due to pressure fluctuations caused by changes in ambient temperature. By using the ball check valve as the back pressure relief valve in the check valve 100 operation of the back pressure relief valve is not essentially dependent on material flexibility but upon the mechanical preload of the spring 122. This significantly improves upon known back pressure relief valves using a flap valve or elastomeric sleeve known in the art in the field of check valves/anti-syphon valves. The pressure at which back pressure relief is achieved can be varied to suit different pumps and heights if required by the system by use of certified rated springs in the ball check valve.

The material for the ball 121 of the ball check valve may be varied to suit the fluid being pumped. In the particular illustrated example in which the tank 1 is used for storing diesel fuels the ball may be formed of an elastomeric material. The positive spring pressure provided by spring 122 overcomes any degradation of the sealing ball over time. Beneficially, the surface area of the ball exposed to the fluid is small in comparison with existing back pressure relief designs incorporating an elastomeric flap valve or an elastomeric sleeve type valve thus further reducing degradation with time and/or exposure to the diesel fuel.

The check valve 100 is scalable and may be manufactured in different sizes using the same principle for the back pressure relief valve.

The valve body 101 may be constructed in brass with a stainless steel guide shaft 108. The lift 107 may include a rubber sealing disc, e.g. nitrile. The valve body 101 may alternatively be formed in nylon or any other suitable materials.

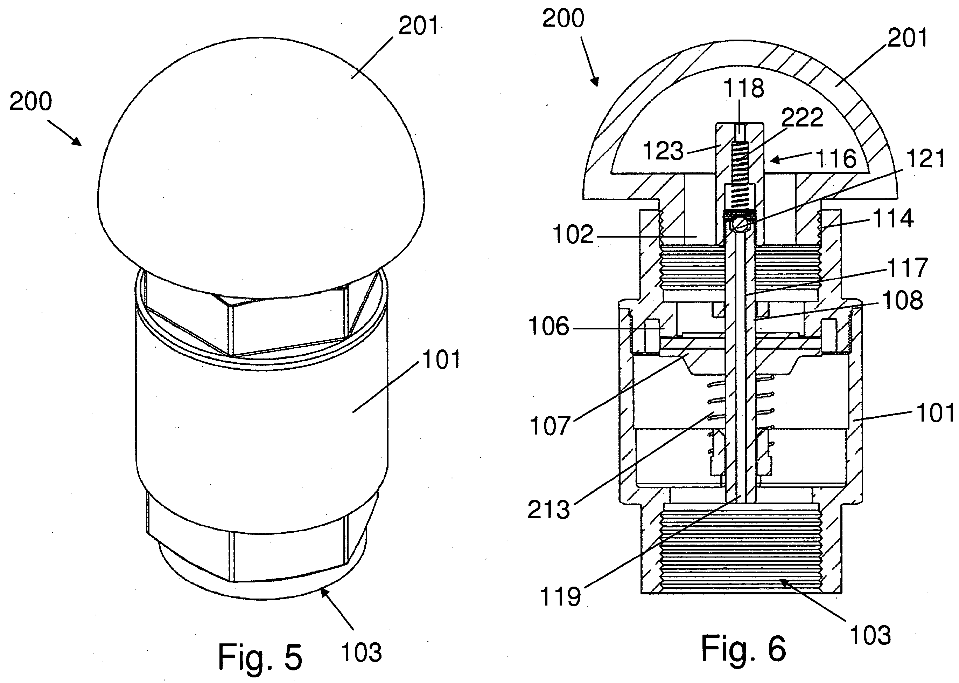

Turning now to Figures 5 and 6 the check valve 200 in accordance with the second embodiment of the invention will be described in detail. The check valve 200 comprises substantially the same components as are found in the check valve 100 of the first embodiment of the invention and accordingly like reference numerals have been used to denote like parts and only the differences between the check valve 200 and the check valve 100 will be described in the following.

Whereas in the first embodiment the spring 113 is rated such that the lift 107 functions as a anti-syphon valve, in the check valve 200 the spring 213 need not be rated and functions simply to close the lift 107 against the seat 106. The spring 122 of the check valve 100 is replaced by a rated spring 222 in the check valve 200. The spring 222 is rated according to a predetermined ball check valve cracking pressure dependent upon the volume of the tank. Preferably, the ball check valve cracking pressure is set greater than a head of pressure in the tank when the tank is full of liquid and the tank is fully inverted. In this way, the back pressure relief valve 116 of the check valve 200 prevents leakage of liquid fuel from the tank 1 in the unlikely event that the tank becomes fully inverted top down when full of liquid fuel.

The internal volume of the tank 1 is on the outlet port side 103 of the check valve 200 and the inlet port side 102 is open to the ambient atmosphere external to the tank 1. In use, when the pressure inside the tank 1 decreases below the ambient pressure the check valve opens by movement of the lift 107 away from the seat 106 so as to permit air to pass through the inlet port 102 past the lift 107 to the outlet port 103 and into the internal volume of the tank 1. This decreasing pressure inside the tank may be due to withdrawing fuel from the tank or to changes in ambient temperature for example.

To prevent ingress of debris and dust into the check valve 200 a cowl 201 is provided over the inlet port 102. In the illustrated embodiment the cowl 201 has a dome shaped top and a screw fitted base for screw threaded communication with the internal screw threads 114 at the inlet port 102. The underside of the cowl has apertures to readily permit fluid communication between the inlet port 102 and the ambient atmosphere.

Although the invention has been described above with reference to one or more preferred embodiments, it will be appreciated that various changes or modifications may be made without departing from the scope of the invention as defined in the appended claims.

## Claims

1. A check valve (100,200) comprising:
a valve body having an inlet port (102), an outlet port (103) and a first seat (106);
a lift (107) mounted on a guide shaft (108) for movement between a closed position in which the lift (107) is retained against the first seat (106) and an open position in which the lift (107) is displaced from the first seat (106) to allow fluid to pass from the inlet port (102) to the outlet port (103);
a first spring (113) for biasing the lift (107) to the closed position; and
a back pressure relief valve (116) comprising a ball check valve (121) mounted in a bore (117) through the guide shaft (108), the bore (117) being open at one end to fluidly communicate with the inlet port (102) and being open at its opposite end to fluidly communicate with the outlet port (103), and the ball check valve (121) having:
a second seat (120),
a ball (121) for movement between a closed position in which the ball (121) is retained against the second seat (120) and an open position in which the ball (121) is displaced from the second seat (120) to allow fluid to pass through the bore (117), and
a second spring (122) for biasing the ball (121) to the closed position,
wherein the ball check valve (121) is configured to open when the pressure at the outlet port (103) exceeds the pressure at the inlet port (102).

2. A check valve according to claim 1, wherein the ball (121) includes an elastomeric material.

3. A check valve according to claim 1 or claim 2, wherein the ball check valve (121) further includes a cap (123) having a through bore (122), the cap (123) being coupled to the guide shaft (108), and the ball (121) and second spring (122) being retained between the guide shaft (108) and the cap (123).

4. A check valve according to any preceding claim, wherein the second seat (120) is
formed in one end of the guide shaft (108).

5. A check valve according to any preceding claim, wherein the ball check valve (121) is located in the inlet side of the check valve.

6. A check valve according to any preceding claim, wherein the second spring (122) is a compression spring.

7. A tank (1) having an internal volume for storage of liquid fuel at substantially atmospheric pressure, at least one liquid supply line in fluid communication with the internal volume, each liquid supply line having a check valve (100, 200) according to any preceding claim.

8. A tank (1) according to claim 7, wherein the first spring (113) is rated according to a predetermined check valve cracking pressure.

9. A tank (1) according to claim 8, wherein the first spring (113) is rated according to the height of the tank, and/or wherein the check valve cracking pressure is set greater than an atmospheric pressure differential between the top and bottom of the tank such that the check valve is configured as an anti-syphon valve.

10. A tank (1) according to any of claims 7 to 9, wherein the internal volume is on the inlet port side of the check valve (100, 200).

11. A tank (1) having an internal volume for storage of liquid fuel at substantially atmospheric pressure, and a vent in fluid communication with the internal volume, the vent having a check valve (100, 200) according to any of claims 1 to 6.

12. A tank (1) according to claim 11, wherein the second spring (122) is rated according to a predetermined ball check valve cracking pressure.

13. A tank (1) according to claim 12, wherein the second spring (122) is rated according to the volume of the tank, and/or wherein the ball check valve cracking pressure is set greater than a head of pressure in the tank when the tank is full of liquid and the tank is fully inverted.

14. A tank (1) according to any of claims 11 to 13, wherein the internal volume is on the outlet port side of the check valve, and the inlet port side of the check valve is open to the ambient atmosphere external to the tank.

15. A tank (1) according to any of claims 7 to 14, wherein the tank is selected from the group comprising: an intermediate bulk container, a bulk storage tank and a bowser, preferably adapted to store a hydrocarbon fuel, in particular a diesel fuel.

## Patentansprüche

1. Rückschlagventil (100,200) mit:
einem Ventilkörper mit einem Einlass-Port (102), einem Auslass-Port (103) und einem ersten Sitz (106);
einem an einem Führungsschaft (108) angeordneten Hubteil (107) zur Bewegung zwischen einer Schließposition, in der das Hubteil (107) gegen den ersten Sitz (106) rückgehalten ist, und einer Öffnungsposition, in der das Hubteil (107) aus dem ersten Sitz (106) heraus verlagert ist, um Fluid aus dem Einlass-Port (102) zu dem Auslass-Port (103) hindurchtreten zu lassen;
einer ersten Feder (113) zum Vorspannen des Hubteils (107) zu der Schließposition; und
einem Gegendruckentlastungsventil (116) mit einem Rückschlag-Kugelventil (121), das in einer durch den Führungsschaft (108) verlaufenden Bohrung (117) angeordnet ist, wobei die Bohrung (117) an einem Ende zwecks Fluidverbindung mit dem Einlass-Port (102) offen ist, und an ihrem gegenüberliegenden Ende zwecks Fluidverbindung mit dem Auslass-Port (103) offen ist, und das Rückschlag-Kugelventil (121) aufweist:
einen zweiten Sitz (120),
eine Kugel (121) zur Bewegung zwischen einer Schließposition, in der die Kugel (121) gegen den zweiten Sitz (120) rückgehalten ist, und einer Öffnungsposition, in der die Kugel (121) aus dem zweiten Sitz (120) heraus verlagert ist, um Fluid durch die Bohrung (117) strömen zu lassen, und
eine zweite Feder (122) zum Vorspannen der Kugel (121) in die Schließposition,
wobei das Kugel-Rückschlagventil (121) derart konfiguriert ist, dass es öffnet, wenn der Druck an dem Auslass-Port (103) den Druck an dem Einlass-Port (102) übersteigt.

2. Rückschlagventil nach Anspruch 1, bei dem die Kugel (121) ein Elastomermaterial aufweist.

3. Rückschlagventil nach Anspruch 1 oder 2, bei dem das Kugel-Rückschlagventil (121) ferner eine Kappe (123) mit einer Durchgangsbohrung (122) aufweist, wobei die Kappe (123) mit dem Führungsschaft (108) verbunden ist, und die Kugel (121) und die zweite Feder (122) zwischen dem Führungsschaft (108) und der Kappe (123) rückgehalten sind.

4. Rückschlagventil nach einem der vorhergehenden Ansprüche, bei dem der zweite Sitz (120) in einem Ende des Führungsschafts (108) ausgebildet ist.

5. Rückschlagventil nach einem der vorhergehenden Ansprüche, bei dem das Kugel-Rückschlagventil (121) in der Einlassseite des Rückschlagventils angeordnet ist.

6. Rückschlagventil nach einem der vorhergehenden Ansprüche, bei dem die zweite Feder (122) eine Druckfeder ist.

7. Tank (1) mit einem Innenvolumen zur Aufnahme flüssigen Kraftstoffs im Wesentlichen auf atmosphärischem Druck, wobei mindestens eine Fluidzufuhrleitung in Fluidverbindung mit dem Innenvolumen steht, wobei jede Fluidzufuhrleitung ein Rückschlagventil (100,200) nach einem der vorhergehenden Ansprüche aufweist.

8. Tank (1) nach Anspruch 7, bei dem die erste Feder (113) entsprechend einem vorbestimmten Rückschlagventil-Öffnungsdruck ausgelegt ist.

9. Tank (1) nach Anspruch 8, bei dem die erste Feder (113) entsprechend der Höhe des Tanks ausgelegt ist und/oder bei dem der Rückschlagventil-Öffnungsdruck derart größer eingestellt ist als ein atmosphärisches Druckdifferential zwischen dem oberen und dem unteren Ende des Tanks, dass das Rückschlagventil als Anti-Siphon-Ventil konfiguriert ist.

10. Tank (1) nach einem der Ansprüche 7 bis 9, bei dem das Innenvolumen an der Einlass-Port-Seite des Rückschlagventils (100,200) angeordnet ist.

11. Tank (1) mit einem Innenvolumen zur Aufnahme flüssigen Kraftstoffs im Wesentlichen auf atmosphärischem Druck, und mit einem Ableitungsdurchlass, der in Fluidverbindung mit dem Innenvolumen steht, wobei der Ableitungsdurchlass ein Rückschlagventil (100,200) nach einem der Ansprüche 1 bis 6 aufweist.

12. Tank (1) nach Anspruch 11, bei dem die zweite Feder (122) entsprechend einem vorbestimmten Kugel-Rückschlagventil-Öffnungsdruck ausgelegt ist.

13. Tank (1) nach Anspruch 12, bei dem die zweite Feder (122) entsprechend dem Volumen des Tanks ausgelegt ist und/oder bei dem der Rückschlagventil-Öffnungsdruck größer eingestellt ist als eine Druckspitze in dem Tank, wenn der Tank mit Flüssigkeit gefüllt ist und der Tank vollständig auf den Kopf gestellt ist.

14. Tank (1) nach einem der Ansprüche 11 bis 13, bei dem das Innenvolumen an der Auslass-Port-Seite des Rückschlagventils angeordnet ist und die Einlass-Port-Seite des Rückschlagventils gegenüber dem außerhalb des Tanks herrschenden atmosphärischen Druck offen ist.

15. Tank (1) nach einem der Ansprüche 7 bis 14, wobei der Tank aus der Gruppe gewählt ist, zu der zählen: ein Großpackmittel, ein Lagertank und ein Betankungswagen, die insbesondere zur Lagerung eines Kohlenwasserstoff-Kraftstoffs, insbesondere eines Dieselkraftstoffs geeignet sind.

## Revendications

1. Soupape anti-retour (100, 200) comprenant :
un corps de soupape comportant un orifice d'entrée (102), un orifice de sortie (103) et un premier siège (106),
un élément de soupape mobile (107) monté sur un arbre de guidage (108) pour lui permettre de se déplacer entre une position d'ouverture dans laquelle il (107) est maintenu contre le premier siège (106) et une position d'ouverture dans laquelle il (107) est écarté du premier siège (106) pour permettre à un fluide de s'écouler de l'orifice d'entrée (102) vers l'orifice de sortie (103),
un premier ressort (113) permettant de rappeler l'élément mobile (107) dans la position de fermeture, et
une soupape de retenue de sécurité (116) comprenant une soupape anti-retour à bille (121) montée dans un perçage (117) au travers de l'arbre de guidage (108), ce perçage (117) étant ouvert à l'une de ses extrémités pour permettre une mise en communication fluidique avec l'orifice d'entrée (107) et étant ouvert à son extrémité opposée pour permettre une mise en communication fluidique avec l'orifice de sortie (103), cette soupape anti-retour à bille (121) comprenant :
un second siège (120),
une bille (121) susceptible de se déplacer entre une position de fermeture dans laquelle la bille (121) est maintenue contre le second siège (120) et une position d'ouverture dans laquelle la bille (121) est déplacée pour s'écarter du second siège (120) pour permettre le passage de fluide au travers du perçage (117), et
un second ressort (122) permettant de rappeler la bille (121) vers sa position de fermeture,
la soupape anti-retour à bille (121) étant conformée pour s'ouvrir lorsque la pression au niveau de l'orifice de sortie (103) est supérieure à la pression au niveau de l'orifice d'entrée (102).

2. Soupape anti-retour conforme à la revendication 1,
dans laquelle la bille (121) renferme un matériau élastomère.

3. Soupape anti-retour conforme à la revendication 1 ou à la revendication 2,
dans laquelle la soupape anti-retour à bille (121) comprend en outre un capuchon (123) ayant un perçage traversant (122), ce capuchon (123) étant couplé à l'arbre de guidage (108), et la bille (121) et le second ressort (122) étant maintenus entre l'arbre de guidage (108) et le capuchon (123).

4. Soupape anti-retour conforme à l'une quelconque des revendications précédentes, dans laquelle le second siège (120) est formé au niveau d'une extrémité de l'arbre de guidage (108).

5. Soupape anti-retour conforme à l'une quelconque des revendications précédentes, dans laquelle la soupape anti-retour à bille (121) est située du côté de l'entrée de la soupape anti-retour.

6. Soupape anti-retour conforme à l'une quelconque des revendications précédentes, dans laquelle le second ressort (122) est un ressort de compression.

7. Réservoir (1) ayant un volume interne permettant le stockage de carburant liquide essentiellement à la pression atmosphérique, au moins une ligne d'alimentation en liquide en communication fluidique avec le volume interne, chaque ligne d'alimentation en liquide comprenant une soupape anti-retour (100, 200) conforme à l'une quelconque des revendications précédentes.

8. Réservoir (1) conforme à la revendication 7, dans lequel le premier ressort (113) est étalonné selon une pression d'ouverture tarée de la soupape anti-retour prédéfinie.

9. Réservoir (1) conforme à la revendication 8, dans lequel le premier ressort (113) est étalonné en fonction de la hauteur du réservoir et/ou la pression d'ouverture de la soupape anti-retour est ajustée pour être supérieure à la différence de pression atmosphérique entre la partie supérieure et le fond du réservoir de sorte que la soupape anti-retour soit réalisée sous la forme d'une valve anti-siphon.

10. Réservoir (1) conforme à l'une quelconque des revendications 7 à 9, dans lequel le volume interne est situé du côté de l'orifice d'entrée de la soupape anti-retour (100, 200).

11. Réservoir (1) ayant un volume interne pour permettre le stockage de carburant liquide, essentiellement sous pression atmosphérique et un évent en communication fluidique avec ce volume interne, cet évent comprenant une soupape anti-retour (100, 200) conforme à l'une quelconque des revendications 1 à 6.

12. Réservoir (1) conforme à la revendication 11, dans lequel le second ressort (122) est étalonné en fonction d'une pression d'ouverture tarée prédéfinie de la soupape anti-retour à bille.

13. Réservoir (1) conforme à la revendication 12, dans lequel le second ressort (122) est étalonné en fonction du volume du réservoir, et/ou la pression d'ouverture de la soupape anti-retour à bille est ajustée pour être supérieure à la pression de tête dans le réservoir lorsque le réservoir est rempli de liquide et est totalement inversé.

14. Réservoir (1) conforme à l'une quelconque des revendications 11 à 13, dans lequel le volume interne est situé du côté de l'orifice de sortie de la soupape anti-retour et le côté de l'orifice d'entrée de la soupape anti-retour est ouvert à l'atmosphère ambiante à l'extérieur du réservoir.

15. Réservoir (1) conforme à l'une quelconque des revendications 7 à 14, dans lequel le réservoir est choisi dans le groupe constitué par les réservoirs suivants :
un conteneur de capacité intermédiaire pour vrac, un réservoir de stockage de poudre et une citerne de préférence adaptée au stockage d'hydrocarbures, en particulier de carburant diesel.
